# EUROPÄISCHE PATENTSCHRIFT

(11) **EP 0 935 870 B1**
(45) Veröffentlichungstag und Bekanntmachung des Hinweises auf die Patenterteilung: **02.01.2002**
(21) Anmeldenummer: 96938042.7
(22) Anmeldetag: 31.10.1996
(51) Int. Cl.: H04M 3/38, H04M 15/00, G07F 7/10

(54) **AUTHENTISIERUNGSEINRICHTUNG EINES KOMMUNIKATIONSNETZES**
AUTHENTICATION SYSTEM FOR A COMMUNICATION NETWORK
SYSTEME D'AUTHENTIFICATION D'UN RESEAU DE COMMUNICATION

(30) Priorität: 02.11.1995 EP 95117274
(43) Veröffentlichungstag der Anmeldung: 18.08.1999
(73) Patentinhaber: SIEMENS AKTIENGESELLSCHAFT, 80333 München (DE)
(72) Erfinder: LUEDER, Reinhard, D-83607 Holzkirchen (DE); ZYGAN-MAUS, Renate, D-81477 München (DE)
(86) Internationale Anmeldenummer: EP9604758
(87) Internationale Veröffentlichungsnummer: WO9716915

(56) Entgegenhaltungen:
- US-A- 4 799 255
- NTZ , Bd. 45, Nr. 4, April 1992, BERLIN, DE, Seiten 254-261, XP000303522 F. KRÜGER: "Das Intelligente Netz ermöglicht neue Dienste und Anwendungen"

## Beschreibung

Für manche Kommunikationsdienste, die z.B. mit Hilfe des Intelligenten Netzes (IN) realisiert werden, wie z.B. Virtual Card Calling (VCC), Universal Personal Telecommunication (UPT), Remote Access zu Virtual Private Network (VPN) und Multimediadienste werden üblicherweise Authentisierungsverfahren verwendet, um die Zugangsberechtigung des Anrufers zum Kommunikationsdienst zu prüfen und ihm die Gebühren zuzuordnen.

Solche Authentisierungsverfahren beruhen üblicherweise auf der Eingabe einer Benutzeridentifikation (z.B. einer Kartennummer) und gegebenenfalls zusätzlich einer Persönlichen Identifikationsnummer (PIN). Diese Authentisierungsdaten muß der Benutzer geheim halten.

Die genannten Authentisierungsverfahren können nur eine begrenzte Sicherheit bieten. Gültige Authentisierungsdaten können nämlich prinzipiell durch das Durchprobieren einer größeren Anzahl von Daten ermittelt und dann mißbräuchlich verwendet werden, z.B. um Kommunikationsvorgänge auf Kosten eines anderen durchzuführen.

Wenn dieser Mißbrauch (illegale Benutzung) durch das Verwenden von Nummern mit großer Stellenzahl erschwert werden soll, entstehen Akzeptanzprobleme, weil dann bei normaler Benutzung (legale Benutzung) sehr lange Eingaben notwendig sind.

Ein Erschweren von Mißbrauch könnte prinzipiell auch durch das Vergebühren von erfolglosen Authentisierungsvorgängen bewirkt werden. Diese Vergebührung könnte allerdings nicht, wie eigentlich erwünscht, zu Lasten des Benutzers erfolgen, da dieser zum Zeitpunkt erfolgloser Authentisierungsvorgänge noch nicht identifiziert ist. Eine Vergebührung stattdessen zu Lasten des benutzten Anschlusses ist andererseits für die legale Benutzung dieser Dienste unerwünscht, weil sie im Widerspruch zum Vergebührungsprinzip dieser Dienste steht. Der benutzte Anschluß soll nämlich nach diesem Vergebührungsprinzip gebührenfrei bleiben, weil der benutzte Anschluß bei diesen Diensten einem Dritten gehören kann.

Die Folge des Gesagten ist, daß, z.B. gesteuert durch einen PC, mißbräuchlich (mit Aussicht auf Erfolg) tausende von Authentisierungsversuchen automatisch durchgeführt werden können, ohne daß dem mißbrauchenden Anrufer (illegaler Benutzer) dafür Gebühren entstehen. Der Mißbrauch kann somit kommerziell ausgeübt werden.

Durch den Umstand, daß erfolglose Authentisierungsvorgänge gebührenfrei sind, wird auch noch ein weiterer Mißbrauchsfall erleichtert. Aus Sicherheitsgründen wird üblicherweise der Dienstzugang für einen Benutzer blockiert, wenn unter seiner Identifikation eine vorgegebene Anzahl von PIN-Fehleingaben überschritten wird. Böswillige können dies benutzen, um vorsätzlich - und ohne daß ihnen dafür Gebühren entstehen - für andere den Dienstzugang zu blockieren.

Der Erfindung liegt die Aufgabe zugrunde, den genannten Mißbrauch zu erschweren, ohne dabei die legale Nutzung der genannten Dienste zu beeinträchtigen.

Diese Aufgabe wird durch die vorliegende Erfindung gelöst.

Durch die erfindungsgemäße Vergebührung bleiben für den normalen Benutzer (genauer gesagt für den Anschluß, über den der Benutzer den Dienst anruft) auch weiterhin erfolglose Authentisierungsvorgänge, die durch Eingabefehler bedingt sind, bis zu einer bestimmten Anzahl gebührenfrei, wenn innerhalb desselben Anrufes schließlich doch noch eine erfolgreiche Authentisierung erfolgt.

Im Mißbrauchsfall wird die versuchte mißbräuchliche Benutzung dagegen durch die große Anzahl der erfolglosen Authentisierungsvorgänge gebührenpflichtig. Der Mißbrauch wird damit wirtschaftlich uninteressant.

Im folgenden wird ein Ausführungsbeispiel der Erfindung anhand der Zeichnung näher erläutert.

Zur Realisierung der Erfindung wird die Vergebührungseinrichtung, die z.B. in einer Vermittlungstelle im Netz realisiert ist, so ausgestattet, daß sie eine vorläufige wiederaufhebbare Vergebührung vornehmen kann. Die Besonderheit dieser Vergebührung besteht darin, daß sie dann wirksam wird, wenn ein Anruf beendet wird bevor eine Wiederaufhebung der Vergebührung erfolgt ist.

### Der Ablauf des erfindungsgemäßen Verfahrens ist wie folgt:

Wenn bei einem Anruf zu einem betreffenden Dienst die Dienststeuerung (im Falle der Dienste-Realisierung mit dem IN ist diese Steuerung im SCP realisiert) eine vollständige, aber erfolglose Authentisierung erkannt hat, beauftragt sie mit der Aktivierung der vorläufigen wiederaufhebbaren Vergebührung diejenige Vermittlungsstelle, der der Anschluß des Anrufes zugeordnet ist (Die genannte Aktivierung kann in einer anderen Variante der Erfindung auch sofort bei Beginn des Anrufes erfolgen. Das ist aber hinsichtlich der Akzeptanz ungünstiger, weil dann vorzeitige Abbrüche, die nicht auf einem Mißbrauch beruhen, gebührenpflichtig werden).

Die Aktivierung wird daraufhin von der beauftragten Vermittlungsstelle durchgeführt, bevor der Anrufer das Ergebnis der Authentisierungsprüfung erfährt (Damit wird sichergestellt, daß der Mißbraucher keine gebührenlose Einzelversuche durchführen kann).

Wenn die Dienststeuerung nachfolgend eine erfolgreiche Authentisierung erkennt, gibt sie den Auftrag zur Wiederaufhebung der Vergebührung und der gesamte Authentisierungsvorgang bleibt gebührenfrei.

Wird ein Anruf nach Überschreiten einer bestimmten zulässigen Anzahl von erfolglosen Authentisierungen jedoch beendet, ohne daß eine nachfolgende erfolgreiche Authentisierung zu einer Wiederaufhebung der vorläufigen Vergebührung geführt hat, wird der Anruf vergebührt.

Die zulässige Anzahl erfolgloser Authentisierungen innerhalb eines Anrufes kann z.B. auf drei festgelegt sein. Wird sie überschritten, so wird der Anruf auf jeden Fall vergebührt. Eine Ausführungsmöglichkeit ist, daß der Anruf dann auch ausgelöst wird.

Damit wird folgendes erreicht:
a) Für den normalen Benutzer (legaler Benutzer), genauer gesagt für den Anschluß, über den der Benutzer den Dienst anruft, bleiben auch weiterhin erfolglose Authentisierungsvorgänge, die durch Eingabefehler bedingt sind, bis zu einer bestimmten Anzahl gebührenfrei, wenn innerhalb desselben Anrufes schließlich doch noch eine erfolgreiche Authentisierung erfolgt.
b) Im Mißbrauchsfall wird die versuchte mißbräuchliche Benutzung dagegen durch die große Anzahl der erfolglosen Authentisierungsvorgänge gebührenpflichtig. Der Mißbrauch wird damit wirtschaftlich uninteressant.

Das erläuterte Verfahren kann selbstverständlich auch so ausgestaltet sein, daß die wiederaufhebbare Vergebührung nicht nach Zeiteinheiten, sondern nach der Zahl von erfolglosen Authentisierungsvorgängen berechnet wird.

Wenn die wiederaufhebbare Vergebührung nach Zeiteinheiten und der Zahl der Versuche erfolgt, kann eine weitere Ausgestaltung darin liegen, daß bereits bei Beginn des Anrufes eine wiederaufhebbare Vergebührung nach Zeiteinheiten erfolgt, wogegen die wiederaufhebbare Vergebührung nach der Zahl der Versuche erst nach einer bestimmten Anzahl von erfolglosen Authentisierungsvorgängen aktiviert wird.

Im folgenden wird ein weiteres Verfahren zur Mißbrauchserschwerung näher erläutert, das in Verbindung mit dem vorherigen Verfahren spezielle Vorteile bietet, die später erläutert werden.

Bei diesem Verfahren erfolgt eine zufallsgesteuerte Vergebührung erfolgloser Authentisierungsversuche mit vorgegebener Wahrscheinlichkeit.

Der Ablauf des Verfahrens ist wie folgt:

Ein Anruf zu einem betreffenden Dienst wird zunächst gebührenfrei begonnen. Wenn die Dienststeuerung einen erfolglosen Authentisierungsversuch erkennt, legt sie zufallsgesteuert fest, ob eine Vergebührung für den vom Anrufer benutzten Anschluß erfolgen soll.

Bei positivem Ergebnis der Zufallssteuerung gibt sie einen Vergebührungsauftrag an die vergebührende Einrichtung, z.B. eine Vermittlung im Netz. Die Vergebührung wird dabei wirksam bevor der Anrufer das Ergebnis der Authentisierungsprüfung erfährt.

Für die Zufallssteuerung wird eine Wahrscheinlichkeit vorgegeben, z.B. 1:20.

Damit wird folgendes erreicht:
- Der normale Benutzer muß bei Eingabefehlern nur damit rechnen, daß dem von ihm benutzten Anschluß nur mit einer Wahrscheinlichkeit von z.B. 1:20 eine Gebühr erhoben wird.
- Im Mißbrauchsfall entsteht beim Durchprobieren zwangsläufig eine hohe Anzahl von Fehlversuchen. Z.B. können im Mittel 10000 Fehlversuche notwendig sein, um zufällig eine erfolgreiche Authentisierung zu treffen. Bei einer Vergebührungswahrscheinlichkeit von z.B. 1:20 müssen dann 500 Versuche bezahlt werden. Damit kann der Mißbrauch wirtschaftlich uninteressant werden, insbesondere wenn für die mißbräuchlich ermittelten Konten relativ niedrige Kreditlimits festgelegt sind.

Die für die Zufallssteuerung vorzugebende Wahrscheinlichkeit kann an den vorhandenen statistischen Sicherheitsgrad einerseits und an die erwartete Benutzerakzeptanz für die Vergebührung von Fehlversuchen andererseits angepaßt werden.

Dieses relativ einfache Verfahren der Mißbrauchserschwerung durch zufallsgesteuerte Vergebührung erfolgloser Authentisierungsversuche ist für sich allein besonders dann gut geeignet, wenn der vorhandene statistische Sicherheitsgrad durch eine größere Stellenzahl für Benutzeridentifikation und/oder PIN relativ hoch ist, so daß im Mißbrauchsfall eine sehr große Anzahl von Authentisierungsversuchen notwendig ist.

Wenn beide Verfahren, nämlich die wiederaufhebbare Vergebührung und die zufallsgesteuerte Vergebührung, kombiniert werden, verringert sich für den normalen Benutzer die Wahrscheinlichkeit einer Vergebührung bei Eingabefehlern noch weiter. Er muß dann bei Eingabefehlern nurmehr damit rechnen, daß mit der Zufallswahrscheinlichkeit von z.B. 1:20 eine Gebühr erhoben wird, wenn er innerhalb desselben Anrufs keine nachfolgend erfolgreiche Authentisierung durchführt.

Leider werden dann auch im Mißbrauchsfall Fehlversuche nur mit der vorgegebenen Zufallswahrscheinlichkeit vergebührt.

Das kann allerdings dann ausreichend sein, wenn der vorhandene statistische Sicherheitsgrad durch eine größere Stellenzahl für Benutzeridentifikation und/oder PIN relativ hoch ist, so daß im Mißbrauchsfall eine sehr große Anzahl von Authentisierungsversuchen notwendig ist.

## Patentansprüche

1. Dienststeuerungseinrichtung eines Kommunikationsnetzes, derart ausgestaltet, daß sie bei einem Anruf eines Benutzers zu einem Kommunikationsdienst eine Authentisierung durchführt, indem sie die vom Benutzer angegebenen Authentisierungsdaten prüft und bei erfolgreicher Authentisierung den Zugang zum Kommunikationsdienst freigibt,
**dadurch gekennzeichnet,daß** sie
a) für den zum Anruf des Kommunikationsdienstes benutzten Netz-Anschluß sofort bei Beginn des Anrufes oder bei Feststellen einer erfolglosen Authentisierung eine vorläufige, wiederaufhebbare Vergebührung veranlaßt, und zwar bevor der Dienste-Benutzer eine erfolglose Authentisierung feststellen kann,
b) die Wiederaufhebung der genannten Vergebührung veranlaßt, wenn innerhalb desselben Dienst-Anrufs eine erfolgreiche Authentisierung festgestellt wird, ohne daß vorher eine vorgegebene Anzahl von erfolglosen Authentisierungen überschritten wurde.

2. Verfahren zur Mißbrauchserschwerung bei Kommunikationsdiensten, bei denen zum Anruf eines Kommunikationsdienstes benutzerspezifische Authentisierungsdaten eingegeben werden müssen, anhand derer vom Kommunikationsnetz die Authentisierung des Dienste-Benutzers durchgeführt wird,
**dadurch gekennzeichnet, daß**
a) für den zum Anruf des Kommunikationsdienstes benutzten Netz-Anschluß sofort bei Beginn des Anrufes oder bei Feststellen einer erfolglosen Authentisierung eine vorläufige, wiederaufhebbare Vergebührung veranlaßt wird, und zwar bevor der Dienste-Benutzer die erfolglose Authentisierung feststellen kann,
b) die Wiederaufhebung der genannten Vergebührung veranlaßt wird, wenn innerhalb desselben Dienst-Anrufs eine erfolgreiche Authentisierung festgestellt wird, ohne daß vorher eine vorgegebene Anzahl von erfolglosen Authentisierungen überschritten wurde.

## Claims

1. Service control device for a communications network, designed in such a manner that it carries out an authentication process when a user calls a communications service, in that it checks the authentication data stated by the user and, if the authentication is successful, allows access to the communications service,
**characterized in that** said device
a) initiates provisional charging, which can be cancelled once again, for the network access used for calling the communications service right at the start of the call or when unsuccessful authentication is detected, to be precise before the service user can detect unsuccessful authentication,
b) initiates the cancellation of said charge once again if successful authentication is detected within the same service call, without a predetermined number of unsuccessful authentication attempts having previously been exceeded.

2. Method for making it harder to misuse communications services, in which user-specific authentication data must be entered in order to call a communications service, on the basis of which authentication data the communications network authenticates the service user,
**characterized in that**
a) provisional charging, which can be cancelled once again, is started for the network access used for calling the communications service right at the start of the call or when unsuccessful authentication is detected, to be precise before the service user can detect unsuccessful authentication,
b) said charge is cancelled once again if successful authentication is detected within the same service call, without a predetermined number of unsuccessful authentication attempts having previously been exceeded.

## Revendications

1. Dispositif de commande de service d'un réseau de communication conformé de telle manière qu'il effectue une authentification lorsqu'un utilisateur fait appel à un service de communication en vérifiant les données d'authentification indiquées par l'utilisateur et en libérant l'accès au service de communication lorsque l'authentification a été couronnée de succès,
**caractérisé en ce qu'**il
a) provoque pour le raccordement au réseau utilisé en vue de l'appel du service de communication, immédiatement au début de l'appel ou en cas de constatation d'une authentification qui a échoué, une taxation provisoire, qui peut être supprimée à nouveau, et cela avant que l'utilisateur de service ne puisse constater une authentification infructueuse,
b) provoque la suppression à nouveau de ladite taxation s'il est constaté pendant le même appel de service une authentification couronnée de succès sans qu'un nombre prescrit d'authentifications infructueuses n'ait été dépassé précédemment.

2. Procédé pour rendre l'utilisation non autorisée difficile dans des services de communication dans lesquels il doit être rentré en vue de l'appel d'un service de communication des données de certification spécifiques à l'utilisateur à l'aide desquels il est effectué par le réseau de communication l'authentification de l'utilisateur de service,
**caractérisé en ce que**
a) il est provoqué pour le raccordement au réseau utilisé en vue de l'appel du service de communication, immédiatement au début de l'appel ou en cas de constatation d'une authentification infructueuse, une taxation provisoire, qui peut être à nouveau supprimée, et cela avant que l'utilisateur de service ne puisse constater l'authentification infructueuse,
b) la suppression à nouveau de ladite taxation est provoquée si, pendant le même appel de service, une authentification couronnée de succès a été constatée sans qu'un nombre prescrit d'authentifications infructueuses n'ait été dépassé précédemment.
